# EUROPEAN PATENT APPLICATION

(11) **EP 4 586 623 A1**
(43) Date of publication of application: **16.07.2025**
(21) Application number: 23862309.4
(22) Date of filing: 01.09.2023
(51) Int. Cl.: H04N 21/442

(54) **MULTIMEDIA COMPONENT TRIGGER METHOD AND APPARATUS, AND ELECTRONIC DEVICE AND STORAGE MEDIUM**

(30) Priority: 08.09.2022 CN 202211098310
(71) Applicant: DOUYIN VISION CO., LTD., Beijing 100041 (CN)
(72) Inventor: ZHONG, Qiu, Beijing 100028 (CN); ZHAO, Dong, Beijing 100028 (CN); LIAO, Yilun, Beijing 100028 (CN)
(74) Representative: Dentons UK and Middle East LLP
(86) International application number: PCT/CN2023/116623
(87) International publication number: WO 2024/051615

(57) **Abstract**

Embodiments of the present disclosure provides a method, an apparatus, an electronic device and a storage medium for triggering multimedia component, in response to a gesture operation for a video playback interface, determining a target trigger region, the target trigger region being a contact region on the video playback interface for the gesture operation, the video playback interface being configured to play a target video currently displayed; detecting the target trigger region and triggering a hidden component or a video component based on a detection result, wherein the hidden component is configured to display a corresponding target page in the video playback interface after being triggered, and the video component is configured to perform a first application function on the target video after being triggered.

## Description

### CROSS REFERENCE TO RELATED APPLICATIONS

The present application claims priority to Chinese Patent Application No. 202211098310.2, filed on September 08, 2022 and entitled "METHOD, APPARATUS, ELECTRONIC DEVICE AND STORAGE MEDIUM FOR TRIGGERING MULTIMEDIA COMPONENT", the entirety of which is incorporated herein by reference.

### FIELD

Embodiments of the present disclosure relate to the field of Internet technologies, and in particular, to a method, an apparatus, an electronic device and a storage medium for triggering multimedia component.

### BACKGROUND

Currently, short video applications based on the Internet are recognized by more and more users with advantages of their free publishing and rich content. In the existing technology, such kind of short video applications usually push the video to the terminal device based on the feed streaming technology, and the user can conveniently perform video watching on one side of the terminal device by gesture operations such as up and down swiping.

### SUMMARY

Embodiments of the present disclosure provide a method, an apparatus, an electronic device and a storage medium for triggering multimedia component.

In a first aspect, embodiments of the present disclosure provide a method for triggering a multimedia component, comprising:
in response to a gesture operation for a video playback interface, determining a target trigger region, the target trigger region being a contact region on the video playback interface for the gesture operation, the video playback interface being configured to play a target video currently displayed; and detecting the target trigger region and triggering a hidden component or a video component based on a detection result, wherein the hidden component is configured to display a corresponding target page in the video playback interface after being triggered, and the video component is configured to perform a first application function on the target video after being triggered.

In a second aspect, embodiments of the present disclosure provide an apparatus for triggering a multimedia component, comprising:
a response module configured to in response to a gesture operation for a video playback interface, determine a target trigger region, the target trigger region being a contact region of the gesture operation on the video playback interface, the video playback interface being configured to play a target video currently displayed; and
a trigger module configured to detect the target trigger region and trigger a hidden component or a video component based on a detection result, wherein the hidden component is configured to display a corresponding target page in the video playback interface after being triggered, and the video component is configured to perform a first application function on the target video after being triggered.

In a third aspect, embodiments of the present disclosure provide an electronic device, comprising:
a processor, and a memory communicatively connected to the processor;
the memory storing computer executable instructions;
the processor executing the computer executable instructions stored in the memory to implement the method for triggering a multimedia component according to the first aspect and various possible designs of the first aspect.

In a fourth aspect, embodiments of the present disclosure provide a computer readable storage medium, the computer readable storage medium storing computer executable instructions, when a processor executes the computer executable instructions, implements the method for triggering a multimedia component according to the first aspect and various possible designs of the first aspect.

In a fifth aspect, embodiments of the present disclosure provide a computer program product, comprising a computer program when being executed by a processor, implementing the method for triggering a multimedia component according to the first aspect and various possible designs of the first aspect.

In a sixth aspect, embodiments of the present disclosure provides a computer program, the computer program being configured to implement the method for triggering a multimedia component according to the first aspect and various possible designs of the first aspect.

A method, an apparatus, an electronic device and a storage medium for triggering multimedia component provided by embodiments of the present disclosure, in response to a gesture operation for a video playback interface, determining a target trigger region, the target trigger region being a contact region on the video playback interface for the gesture operation, the video playback interface being configured to play a target video currently displayed; detecting the target trigger region and triggering a hidden component or a video component based on a detection result, wherein the hidden component is configured to display a corresponding target page in the video playback interface after being triggered, and the video component is configured to perform a first application function on the target video after being triggered.

### BRIEF DESCRIPTION OF DRAWINGS

In order to more clearly illustrate embodiments of the present disclosure or the technical solutions in the existing technology, the accompanying drawings need to be used in the description of embodiments or the existing technology will be briefly introduced below, and it will be apparent that the drawings in the following descriptions are some embodiments of the present disclosure, and those skilled in the art may also obtain other drawings according to these drawings without creative labor.
FIG. 1 is an application scenario diagram of a method for triggering a multimedia component provided by embodiments of the present disclosure;
FIG. 2 is a schematic flowchart 1 of a method for triggering a multimedia component provided by embodiments of the present disclosure;
FIG. 3 is a schematic diagram of a video playback interface provided by embodiments of the present disclosure;
FIG. 4 is a schematic diagram of a target trigger region provided by embodiments of the present disclosure;
FIG. 5 is a flowchart of a specific implementation of step S101 in the embodiment shown in FIG. 2;
FIG. 6 is a schematic diagram of a process of determining a target trigger region provided by embodiments of the present disclosure;
FIG. 7 is a flowchart of a specific implementation of step S102 in the embodiment shown in FIG. 2;
FIG. 8 is a schematic diagram of a process of determining to trigger a hidden component provided by embodiments of the present disclosure;
FIG. 9 is a schematic diagram of a dynamic target object provided by embodiments of the present disclosure;
FIG. 10 is a schematic flowchart 2 of a method for triggering a multimedia component provided by embodiments of the present disclosure;
FIG. 11 is a schematic diagram of a logical structure of a video playback interface provided by embodiments of the present disclosure;
FIG. 12 is a schematic diagram of a process of triggering a hidden component by long-pressing gesture operation provided by embodiments of the present disclosure;
FIG. 13 is a schematic diagram of triggering a hidden component based on a page container provided by embodiments of the present disclosure;
FIG. 14 is a block diagram of a structure of an apparatus for triggering a multimedia component provided by embodiments of the present disclosure;
FIG. 15 is a schematic diagram of a structure of an electronic device provided by embodiments of the present disclosure; and
FIG. 16 is a schematic diagram of a hardware structure of an electronic device provided by embodiments of the present disclosure.

### DETAILED DESCRIPTION

In order to make the objectives, technical solutions and advantages of embodiments of the present disclosure clearer, the technical solutions in embodiments of the present disclosure will be clearly and completely described below with reference to the accompanying drawings in embodiments of the present disclosure. Obviously, embodiments described are a part of embodiments of the present disclosure, rather than all embodiments. Based on embodiments of the present disclosure, all other embodiments obtained by those skilled in the art without creative labor belong to the protection scope of the present disclosure.

The application scenario of embodiments of the present disclosure is explained in the following:

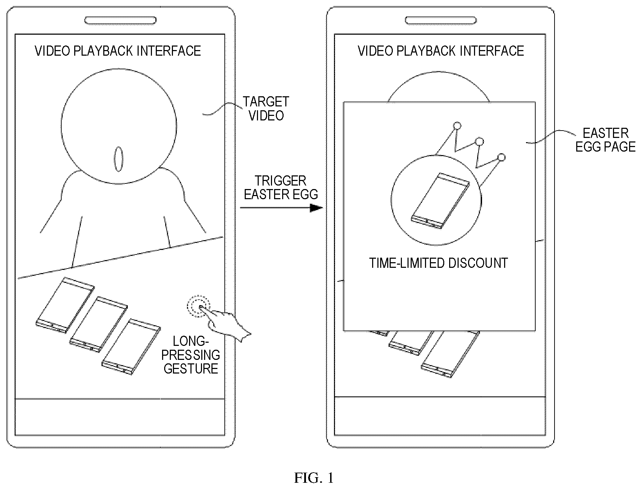

FIG. 1 is an application scenario diagram of a method for triggering a multimedia component provided by embodiments of the present disclosure, the method for triggering a multimedia component provided by embodiments of the present disclosure may be applied to an application scenario of short video playback, more specifically, may be applied to an application of triggering hidden information in the short video. As shown in FIG. 1, the method provided by embodiments of the present disclosure may be applied to a terminal device, for example, a smart phone, a tablet computer, or the like. As an example, the terminal device runs a short video class of application programs inside, in a process of the terminal device playing a target video (short video) by the application program, there is certain hidden information set hidden in a video playback interface, that is, "easter eggs", and when the user performs a gesture operation for the video playback interface, if the multimedia component corresponding to the easter egg is triggered (as shown in the figure, triggering the easter egg when applying the long-pressing gesture), then the hidden page corresponding to the hidden information, that is, "easter egg page", is displayed on the upper layer of the video playback interface. More specifically, for example, for propagating video, promotion event page and so on, thereby achieving the purpose of triggering the hidden information in the short video.

In the existing technology, in a short video application based on a feed streaming technology, for the video currently played, only simple interactive operations such as video switching, video like and so on may be implemented, but a more complex interactive operation may not be added, for example, an operation of triggering an easter egg (an easter egg may refer to the related description of the application scenario shown in FIG. 1) in a short video, that is because a video component for displaying a video in a short video application has a native operation mode predetermined by an application program, for example, a long-pressing gesture operation, which may implement a "like" function for a video currently played; and an up and down swiping gesture operation, which may implement a "switching" function for a video currently played. The easter egg is a page presenting mode for improving interaction interestingness and content presenting diversity by a hidden trigger control (not displaying the position of the trigger control), which needs to be implemented by triggering the hidden component in the specific region by the user with the gesture operation, and in the process, when the trigger region of the hidden component overlaps with the trigger region of the video component, the trigger logic of the easter egg is caused to conflict with the native operation logic of the application program, thereby causing the problem that the hidden component may not be used or the video component may not be used. Embodiments of the present disclosure provide a method for triggering a multimedia component to solve the above problem.

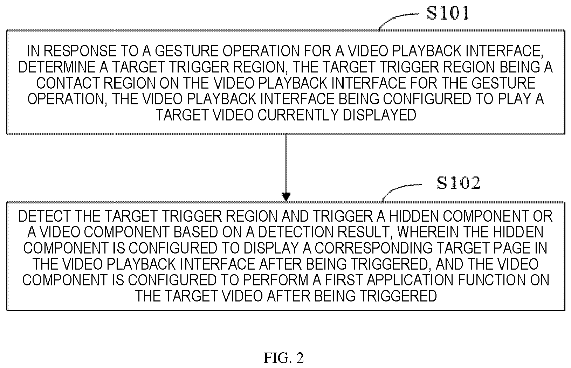

Referring to FIG. 2, FIG. 2 is a schematic flowchart 1 of a method for triggering a multimedia component provided by embodiments of the present disclosure. The method of this embodiment may be applied in a terminal device, and the method for triggering a multimedia component includes:
Step S101: in response to a gesture operation for a video playback interface, determine a target trigger region, the target trigger region being a contact region on the video playback interface for the gesture operation, the video playback interface being configured to play a target video currently displayed.

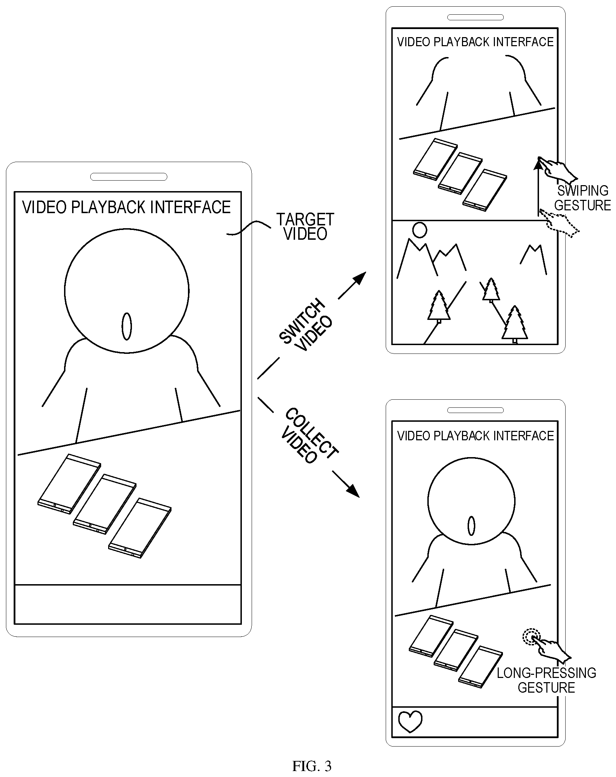

As an example, the execution body of the method provided by this embodiment may be a terminal device, for example, a smart phone, a tablet computer, or the like. The terminal device runs an application program for playing a video inside, and more specifically, for example, a short video application program based on a feed streaming technology, where the application program plays a short video by a video playback interface. FIG. 3 is a schematic diagram of a video playback interface provided by embodiments of the present disclosure.

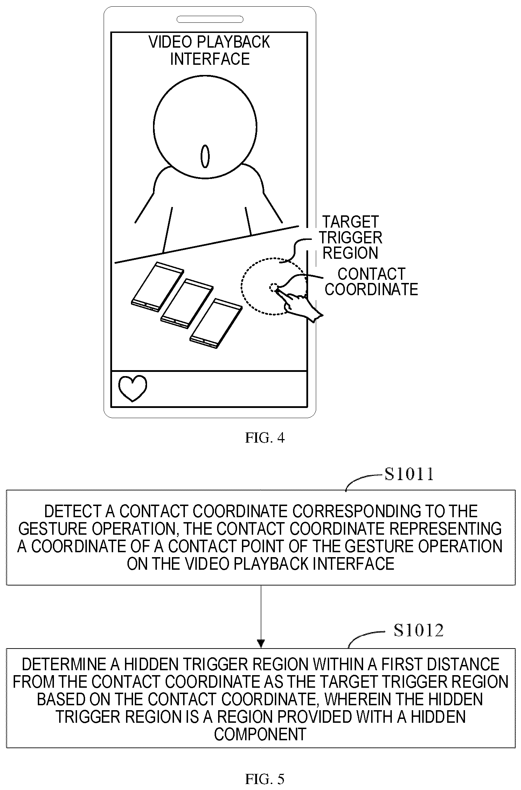

Based on the foregoing description for the video playback interface, as an example, when the user applies a gesture operation to the video playback interface displayed in the target application by an interaction unit of the terminal device, such as a touch screen, the interaction unit may determine a contact region of the gesture operation on the video playback interface by checking the gesture operation, and the contact region is the target trigger region. FIG. 4 is a schematic diagram of a target trigger region provided by embodiments of the present disclosure, as shown in FIG. 4, the interaction unit is, for example, a touch screen, and the gesture operation is, for example, a click gesture, when the click gesture is applied to the touch screen of the terminal device, the capacitance of the touch screen is caused to be changed, the touch screen determines the specific contact position of the click gesture by detecting the changing situation of capacitance, and more specifically, for example, the coordinate of the contact position, that is, the contact coordinate. Furthermore, the target trigger region is determined according to the region to which the contact coordinate belongs, where the contact coordinate is located inside the target trigger region. Further, the contour shape of the target trigger region may have various implementations, such as non-rectangular, circular, or other irregular shapes, and the details will not be described here again.

Further, in a possible implementation, as shown in FIG. 5, the specific implementation step of step S102 includes:
Step S1011: detect a contact coordinate corresponding to the gesture operation, the contact coordinate representing a coordinate of a contact point of the gesture operation on the video playback interface.

Step S1012: determine a hidden trigger region within a first distance from the contact coordinate as the target trigger region based on the contact coordinate, wherein the hidden trigger region is a region provided with a hidden component.

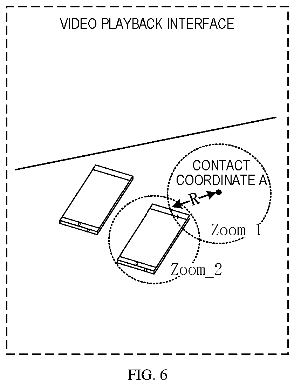

As an example, after detecting the contact coordinate corresponding to the gesture operation, in a possible implementation, the target trigger region corresponding to the contact coordinate is determined according to a predetermined mapping relationship between the contact coordinate and the trigger region, and such implementation will not be described here again. In another possible implementation, the hidden trigger region in the predetermined range with the contact coordinate as the center is searched by the contact coordinate, if the predetermined range includes the hidden trigger region inside, the hidden trigger region is determined as the target trigger region. FIG. 6 is a schematic diagram of a process of determining a target trigger region provided by embodiments of the present disclosure. As shown in FIG. 6, after determining the contact coordinate A, a circular region Zoom_1 with a first distance R as a radius and with the contact coordinate A as the center is detected, and it is detected that the predetermined hidden trigger region Zoom_2 partially overlaps the Zoom_1, then it is considered that the hidden trigger region is within the first distance from the contact coordinate. Furthermore, the hidden trigger region Zoom_2 is determined as the target trigger region.

In this embodiment, by detecting the hidden trigger area within the predetermined range of the contact coordinate corresponding to the gesture operation, the target trigger region is determined to be within the hidden trigger region first, and since the easter eggs are usually invisible in the application scenario of triggering the easter eggs (hidden information) in the short videos, the problem that the gesture operation of the user is inaccurate may be caused. With the method in the step of this embodiment, the automatic adjustment of the contact coordinate being located in the peripheral region of the hidden trigger region may be implemented, and the probability that the user triggers the easter eggs is improved and the user experience is improved.

Step S102: detect the target trigger region and trigger a hidden component or a video component based on a detection result, wherein the hidden component is configured to display a corresponding target page in the video playback interface after being triggered, and the video component is configured to perform a first application function on the target video after being triggered.

As an example, after the target trigger region is determined, the target trigger region is further detected, and the obtained detection result is used to determine whether the target trigger region is specifically used to trigger a hidden component or a video component. If the target trigger region is used to trigger the hidden component, then the hidden component is triggered, and after the corresponding program is invoked, the corresponding target page is displayed in the video playback interface, so that the purpose of triggering the hidden information is achieved; if the target trigger region is used to trigger the video component, then the video component is triggered, and after the corresponding program is invoked, the first application function is performed on the target video, to implement a conventional application function for the target video, for example, giving a like, collecting, switching video, etc.

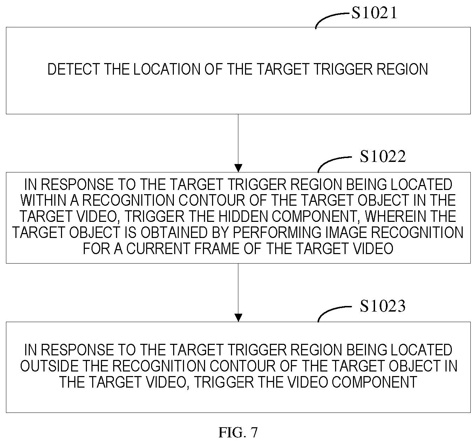

In a possible implementation, the location of the hidden trigger region dynamically changes with the playing of the target video. As shown in FIG. 7, as an example, the specific implementation step of step S102 includes:
Step S1021: detect the location of the target trigger region.

Step S1022: in response to the target trigger region being located within a recognition contour of the target object in the target video, trigger the hidden component, wherein the target object is obtained by performing image recognition for a current frame of the target video.

Step S1023: in response to the target trigger region being located outside the recognition contour of the target object in the target video, trigger the video component.

As an example, the target object is an image element determined based on semantic information of the target video, such as a face, a person, and an object with a feature, for example, an automobile, a house, or the like in the video, which may be obtained by the image recognition technology, and will not be described here again. After the position of the target trigger region is detected, it is determined whether the target trigger region falls within the recognition contour of the target object in the target video according to the position of the target trigger region, wherein the recognition contour refers to a contour formed after the shape contour of the target object extends outward a predetermined distance, and the predetermined distance is greater than or equal to 0. As an example, the region corresponding to the recognition contour is the hidden trigger region.

Further, if the target trigger region falls within the recognition contour of the target object, then the target trigger region belongs to the hidden trigger region, after that the hidden component is triggered, and a subsequent corresponding invoking procedure is performed, and if the target trigger region does not fall within the recognition contour of the target object, then the target trigger region does not belong to the hidden trigger region, after that the video component is triggered, and a subsequent corresponding invoking procedure is performed.

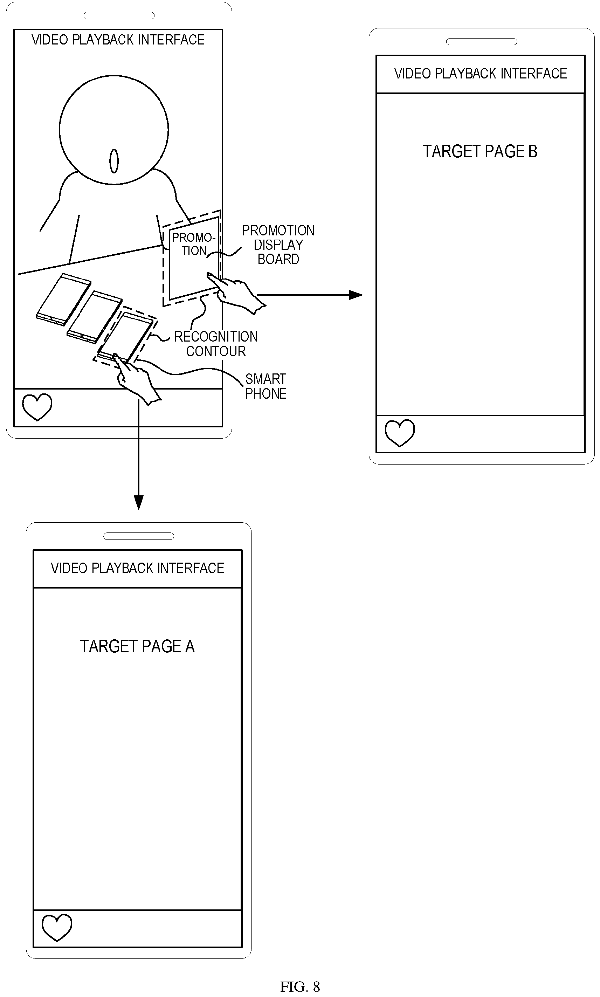

FIG. 8 is a schematic diagram of a process of determining to trigger a hidden component provided by embodiments of the present disclosure. As shown in FIG. 8, the target video includes two target objects, that is, "smart phone" and "promotion display board" in the target video, respectively, where "smart phone" and "promotion display board" respectively correspond to one recognition contour. After the target trigger region is obtained by detecting the gesture operation, if the target trigger region falls within the recognition contour corresponding to the "smart phone", then the hidden component corresponding to the smart phone is triggered, for example, the target page A is displayed on the video playback interface, and the target page A is used to present the parameter of the smart phone; if the target trigger region falls within the recognition contour corresponding to the "promotion display board", then the hidden component corresponding to the promotion display board is triggered, for example, the target page B is displayed on the video playback interface, and the target page B is used to present the video of the promotion activity of the smart phone; in addition, if the target trigger region does not fall within the recognition contour corresponding to the "smart phone" nor falls within the recognition contour corresponding to the "promotion display board", that is, the target trigger region is located outside the recognition contour of the target object in the target video, then the corresponding video component is triggered according to the specific gesture operation, for example, the target video currently played is collected.

In the step of the embodiment, by detecting the relationship between the target trigger region and the recognition contour of the target object, triggering dynamic easter eggs for different target objects is achieved, which enables different target objects to trigger corresponding types of hidden information, and the diversity and content richness of the information are improved.

In a possible implementation, the position of the target object changes dynamically with the playing of the target video, and before step S1021, further including:
Detecting a target object in a target video in real time.

As an example, in the process of playing the target video, with the playing progress, the content played by the target video changes, that is, the content displayed in the current frame of the target video changes, and in each video frame, the target object corresponding to the target video may be at the same or different positions, and the target object may or may not exist.

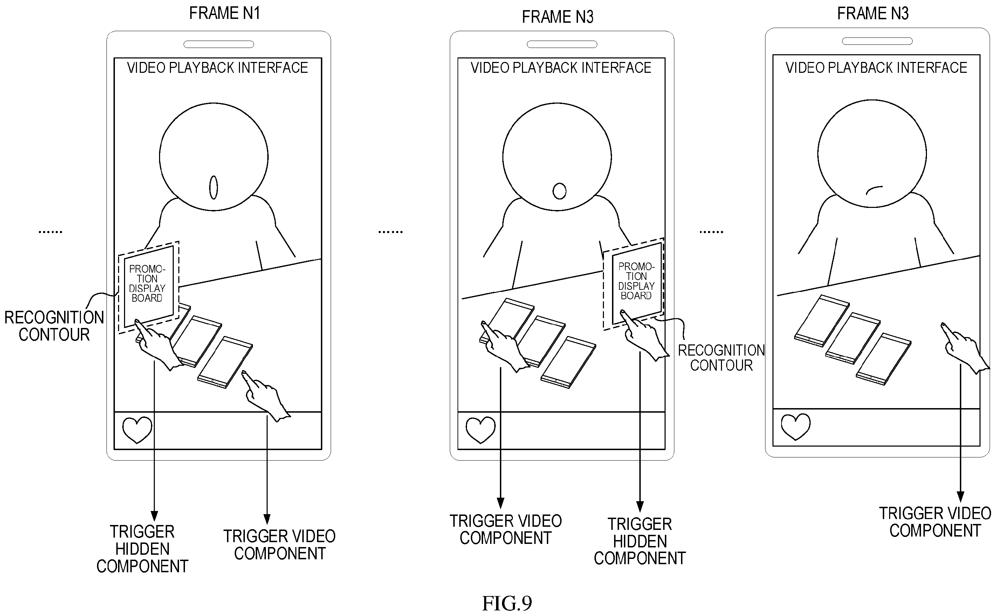

FIG. 9 is a schematic diagram of a dynamic target object provided by embodiments of the present disclosure. As shown in FIG. 9, the target object such as "promotion display board" shown in FIG. 9, reference is made to FIG. 9, the "promotion display board" is located in the left side of the current video (in current video frame) at frame N1 of the target video; the "promotion display board" is located in the right side of the current video (in current video frame) at frame N2 of the target video; and the "promotion display board" is located outside of the current video (in current video frame) at frame N3 of the target video, that is, the target object does not exist in the target video. When the target trigger region falls within the recognition contour of the target object, the hidden component is triggered, and the hidden information is triggered based on the subsequent steps; when the target trigger region falls outside the recognition contour, the corresponding video component is triggered according to the specific gesture operation, or return to the step S1020 and re-execute the above steps, and the target object and the gesture operation are re-detected.

In this embodiment, by detecting the relationship between the target trigger region and the recognition contour of the target object in real time in the target video, the dynamic hidden trigger region for the target video is achieved, which enables the hidden trigger region to follow the specific target object in real time, and the flexibility and interestingness of triggering multimedia component are improved.

In this embodiment, in response to a gesture operation for a video playback interface, a target trigger region is determined, the target trigger region being a contact region on the video playback interface for the gesture operation, the video playback interface being configured to play a target video currently displayed; the target trigger region is detected and a hidden component or a video component is triggered based on a detection result, wherein the hidden component is configured to display a corresponding target page in the video playback interface after being triggered, and the video component is configured to perform a first application function on the target video after being triggered. Since the terminal device firstly determines the corresponding target trigger region according to the gesture operation after detecting the gesture operation for the video playback page, then determines whether the hidden component or the video component should be triggered based on the detection result for the target trigger region, avoiding the operation conflict between the hidden component and the video component, to achieve normal triggering for the hidden component, thereby improving the interaction interestingness and content presenting diversity in the process of video playing under the hidden information triggering mode.

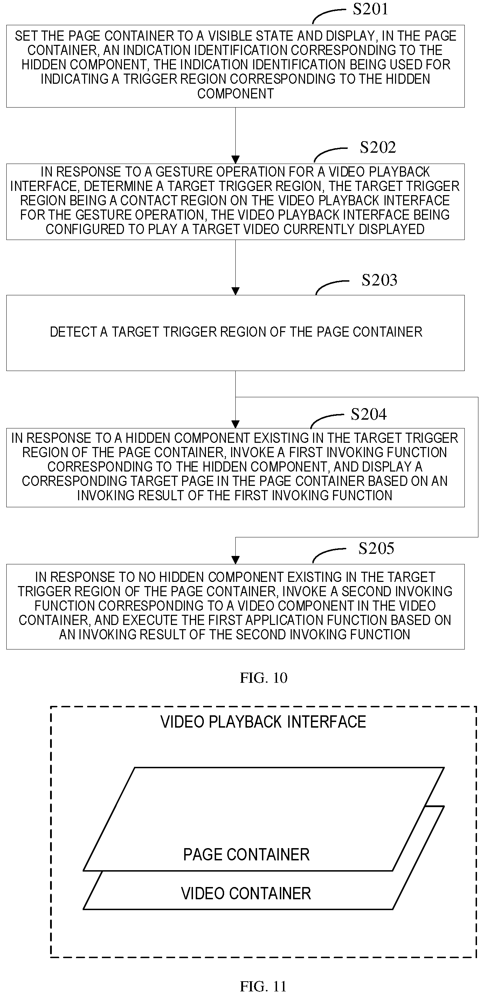

Referring to FIG. 10, FIG. 10 is a schematic flowchart 2 of a method for triggering a multimedia component provided by embodiments of the present disclosure. Based on the embodiment shown in FIG. 2, in this embodiment, step S102 is further refined, where the video playback interface includes a video container and a page container that are overlapping set, where the page container is on the upper layer of the video container. The method for triggering a multimedia component provided by this embodiment includes:
Step S201: set the page container to a visible state and display, in the page container, an indication identification corresponding to the hidden component, the indication identification being used for indicating a trigger region corresponding to the hidden component.

For example, FIG. 11 is a schematic diagram of a logical structure of a video playback interface provided by embodiments of the present disclosure. The video playback interface includes a video container and a page container overlapping set, and each of the video container and the page container corresponds to one layer. Thus, the video container and the page container may refer to a video container layer and a page container layer. In the default state, the page container is set to be on the upper layer of the video container, but the page container is invisible. The video container is used for displaying the target video and setting the video component, and the page container is used for displaying the target page and setting the hidden component, and the page container is invisible before in response to the gesture operation for the video playback interface. Further, both the video container and the page container are software modules, implemented by corresponding classes, wherein as an example, the video container is implemented based on canvas; and the page container is implemented based on a lynx container.

In the process of playing the target video in the video playback interface, if the predetermined condition is satisfied, the indication identification may be displayed in the page container to indicate the position of the hidden component, and more specifically, for example, the hidden trigger region is displayed in a highlighted manner, thereby prompting the user in which area triggers the easter egg video, thereby improving the interaction efficiency. It should be noted that step S201 is an optional step in this embodiment, and in this embodiment, subsequent steps may be performed without performing step S201.

Step S202: in response to a gesture operation for a video playback interface, determine a target trigger region, the target trigger region being a contact region on the video playback interface for the gesture operation, the video playback interface being configured to play a target video currently displayed.

S203: detect a target trigger region of the page container.

S204: in response to a hidden component existing in the target trigger region of the page container, invoke a first invoking function corresponding to the hidden component, and display a corresponding target page in the page container based on an invoking result of the first invoking function.

As an example, after the user applying the gesture operation on the video playback interface, the terminal device may detect the gesture operation and determine the corresponding target trigger region, and the specific implementation of this step is introduced in details in the step S101 of the embodiment shown in FIG. 2, and will not be described here again.

After that, the terminal device first detects the page container based on the obtained target trigger region, and determines whether a hidden component exists in the target trigger region of the page container, and the specific implementation is implemented by invoking a corresponding function interface of the page container, and will not be described here again. Based on embodiments shown in FIG. 11 and the foregoing description of the existing technology, both the page container and the application container may be used to respond to the gesture operation of the user, meanwhile, the page container is overlapping added above the application container. After the gesture operation is detected, both the page container and the application container need to respond to the gesture operation, thus causing a problem of logical conflict. In this embodiment, in response to the gesture operation for the video playback interface, the target trigger region of the page container is detected first, and if the hidden component exists in the target trigger region of the page container, then the first invoking function corresponding to the hidden component is invoked to implement the corresponding function, that is, the corresponding target page is displayed in the page container to implement the trigger of the hidden information, and after that, if the hidden component does not exist in the target trigger region of the page container, then the second invoking function corresponding to the video component in the video container is invoked to implement the corresponding function, that is, executing the first application function, for example, like a video. Therefore, the problem of logical conflict between the page container and the application container is solved.

Further, more specifically, for example, the page container is a lynx container, and the video container is a canvas container. The specific implementation is as follows: adding user-interaction-enabled = false to the bottom full-screen canvas, indicating that responding to an event is not needed, and user-interaction-enabled = false is not added to the rest of elements in the upper layer of the canvas, and responding to an event as normal. When a user detects an operation (for example, a click operation) on a screen, the terminal device (the target application running inside) may detect, according to the click coordinate, an element that should respond to the event, and for an overlapping element (referring to the bottom video and the upper layer full-screen canvas here), the default behavior is that the event is consumed regardless of whether the upper element is bound to the invoking function clicked. However, because the canvas is set with user-interaction-enabled = false, it may not be used as an event target (target) all along the detection stage, and the detection mechanism of the event target (target) continues until the bottom video element is found. After the user long-pressing the guidance gesture, the level of the page container rises to the highest level, and the full-screen target page is played.

In a possible implementation, as an example, the gesture operation is a long-pressing gesture operation. The specific implementation of step S204 includes:
In response to the long-pressing gesture operation, a guidance identification is displayed.

After detecting the long-pressing gesture operation for a first duration, a hidden component corresponding to the target trigger region is triggered, to display, in the video playback interface, a target page corresponding to the hidden component.

As an example, in an application scenario of triggering the hidden information, a problem of touching by accident may occur for a gesture operation of the user in view of invisibility of the hidden component. For example, when the duration of the "long-pressing gesture" operation is too short, it may be confused with the "click gesture" operation, thereby touching by accident occurs and the interaction experience is affected.

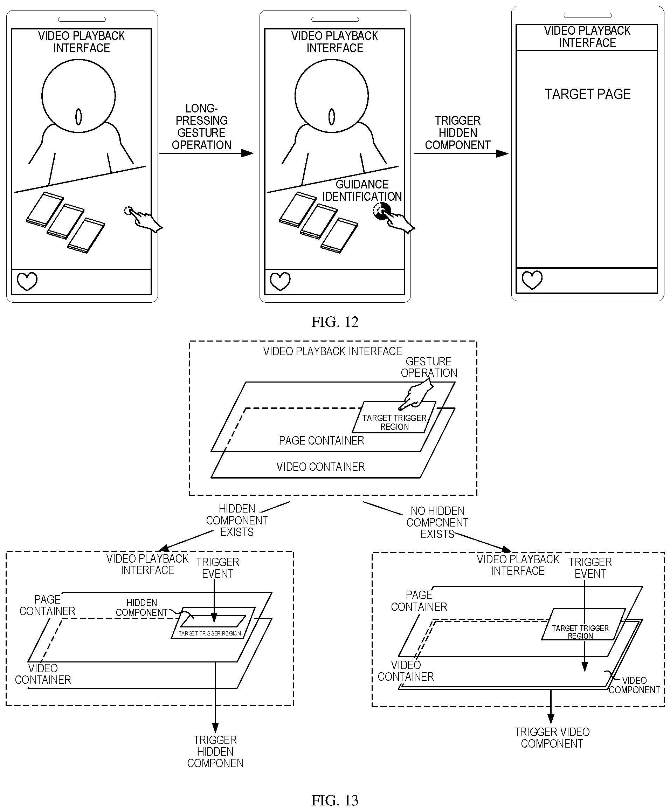

FIG. 12 is a schematic diagram of a process of triggering a hidden component by long-pressing gesture operation provided by embodiments of the present disclosure. As shown in FIG. 12, after a user applying a long-pressing gesture operation for a video playback interface, the terminal device displays a guidance identification on the video playback interface, the guidance identification may be an icon that changes over time. Reference is made to FIG. 12, as an example, the guidance identification is a circular progress bar, and with the continue of the long-pressing gesture, the circular progress bar continues to advance, and when the long-pressing gesture operation lasts for the first duration, the progress bar goes to the end. After that, the hidden component corresponding to the target trigger region is triggered, and the target page is displayed on the page container, the target page being used for such as playing the video of the easter egg.

In the step of this embodiment, by setting the guidance identification, the hidden component is triggered after long-pressing sustained for the first duration, so that the error is avoided, and the interaction efficiency and the use experience are improved.

Step S205: in response to no hidden component existing in the target trigger region of the page container, a second invoking function corresponding to a video component in the video container is invoked, and the first application function is executed based on an invoking result of the second invoking function .

As an example, in another case, since the video container for the target application is usually full-screen, performing the gesture operation anywhere within the video playback interface may implement the trigger of the video component. Therefore, if the hidden component does not exist in the target trigger region of the page container, it illustrates that this region is not the hidden trigger region, at this time, the video component of the video container is triggered, and the second invoking function corresponding to the video component is invoked, thereby implementing the control for the target video and executing the first application function.

FIG. 13 is a schematic diagram of triggering a hidden component based on a page container provided by embodiments of the present disclosure. As shown in FIG. 13, a page container overlaps an upper layer of a video container, and when a trigger event corresponding to the gesture operation is generated, it is first determined whether a hidden component exists in a target trigger region of the page container, and if a hidden component exists, then the page container consumes the trigger event, and the target page is displayed in full screen in the page container (the hidden component is triggered); and if no hidden component exists, then the trigger event passes through the page container to reach the video container, and the trigger event is consumed by the video container, so that the first application function, for example, like a video, is executed.

In this embodiment, by the page container and the video container overlapping set, the hidden component in the target trigger region of the page container is detected first, and the hidden component or the video component is triggered according to the detection result, thereby avoiding the logical conflict between the hidden component and the video component.

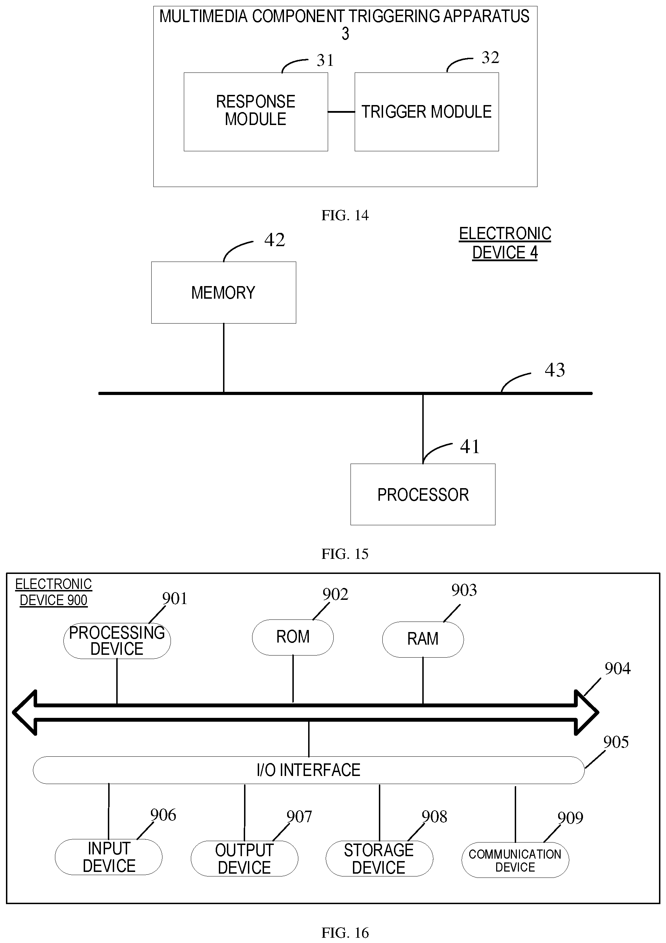

Corresponding to the method for triggering a multimedia component provided by the foregoing embodiment, FIG. 14 is a block diagram of a structure of an apparatus for triggering a multimedia component provided by embodiments of the present disclosure. For ease of illustration, only portions related to embodiments of the present disclosure are shown. Referring to FIG. 14, the multimedia component triggering apparatus 3 includes:
Response module 31 configured to in response to a gesture operation for a video playback interface, determine a target trigger region, the target trigger region being a contact region of the gesture operation on the video playback interface, the video playback interface being configured to play a target video currently displayed.

Trigger module 32 configured to detect the target trigger region and trigger a hidden component or a video component based on a detection result, wherein the hidden component is configured to display a corresponding target page in the video playback interface after being triggered, and the video component is configured to perform a first application function on the target video after being triggered.

In one embodiment of the present disclosure, the response module 31 is specifically configured to: obtain a contact coordinate corresponding to the gesture operation, the contact coordinate representing a coordinate of a contact point of the gesture operation on the video playback interface; determine a hidden trigger region within a first distance from the contact coordinate as the target trigger region based on the contact coordinate, wherein the hidden trigger region is a region provided with a hidden component.

In one embodiment of the present disclosure, the trigger module 32 is specifically configured to: detect a target object in a target video in real time; in response to the target trigger region being located within a recognition contour of the target object in the target video, trigger the hidden component, wherein the target object is obtained by performing image recognition for a current frame of the target video; in response to the target trigger region being located outside the recognition contour of the target object in the target video, trigger the video component.

In one embodiment of the present disclosure, the video playback interface comprises a video container and a page container with overlapping settings, wherein the video container is configured to display the target video and set the video component, the page container is configured to display the target page and set the hidden component, and the page container is invisible before the in response to a gesture operation for a video playback interface.

In one embodiment of the present disclosure, the trigger module 32 is specifically configured to: detect a target trigger region of the page container; in response to a hidden component existing in the target trigger region of the page container, invoke a first invoking function corresponding to the hidden component, and displaying a corresponding target page in the page container based on an invoking result of the first invoking function.

In one embodiment of the present disclosure, the trigger module 32 is further configured to: in response to no hidden component existing in the target trigger region of the page container, invoke a second invoking function corresponding to a video component in the video container, and execute the first application function based on an invoking result of the second invoking function.

In one embodiment of the present disclosure, the video container is implemented based on canvas; and the page container is implemented based on a lynx container.

In one embodiment of the present disclosure, before in response to a gesture operation for a video playback interface, determining a target trigger region, the trigger module 32 is further configured to set the page container to a visible state and display, in the page container, an indication identification corresponding to the hidden component, the indication identification being used for indicating a trigger region corresponding to the hidden component.

In one embodiment of the present disclosure, the gesture operation is a long-pressing gesture operation; and before triggering a hidden component, the trigger module 32 is further configured to: in response to the long-pressing gesture operation, display a guidance identification;
When triggering a hidden component, the trigger module 32 is specifically configured to: after detecting the long-pressing gesture operation for a first duration, trigger a hidden component corresponding to the target trigger region, to display, in the video playback interface, a target page corresponding to the hidden component.

The response module 31 is connected to the trigger module 32. The multimedia component triggering apparatus 3 provided in this embodiment may perform the technical solutions of the foregoing method embodiment, and its implementation principles and technical effects are similar, and will not be described here again in this embodiment.

FIG. 15 is a schematic diagram of a structure of an electronic device provided by embodiments of the present disclosure. As shown in FIG. 15, the electronic device 4 includes:
A processor 41, and a memory 42 communicatively connected to the processor 41;
The memory 42 storing computer executable instructions;
The processor 41 executing the computer executable instructions stored in the memory 42 to implement the method for triggering a multimedia component in embodiments shown in FIG. 2 to FIG. 13.

Optionally, the processor 41 and the memory 42 are connected with a bus 43.

Related descriptions may be understood with reference to related descriptions and effects corresponding to the steps in embodiments corresponding to FIG. 2 to FIG. 13, and details are not described here again.

Referring to FIG. 16, which illustrates a schematic diagram of a hardware structure of an electronic device provided by embodiments of the present disclosure, and the electronic device 900 may be a terminal device or a server. The terminal device may include, but are not limited to, mobile phones, notebook computers, digital broadcast receivers, personal digital assistant (PDA), portable Android device (PAD), portable multimedia player (PMP), vehicle-mounted terminals (such as vehicle-mounted navigation terminals), etc., as well as fixed terminals such as digital television (TV), desktop computers, etc. The electronic device shown in FIG. 16 is only an example, and should not limit the function and application range of embodiments of the present disclosure.

As shown in FIG. 16, the electronic device 900 may include a processing device (such as a central processing unit, a graphics processing unit, or the like) 901 that may perform various appropriate actions and processing according to a program stored in a read only memory (ROM) 902 or a program loaded from a storage device 908 into a random access memory (RAM) 903. In the RAM 903, various programs and data required for operation of the electronic device 900 are further stored. The processing device 901, the ROM 902, and the RAM 903 are connected to each other by using a bus 904. An input/output (I/O) interface 905 is also connected to the bus 904.

Generally, the following devices may be connected to the I/O interface 905: input device 906 including, for example, a touchscreen, a touchpad, a keyboard, a mouse, a camera, a microphone, an accelerometer, and a gyroscope; output device 907 including, for example, a liquid crystal display (LCD), a loudspeaker and a vibrator; storage device 908 including, for example, a tape or a hard disk; and a communications device 909. The communications device 909 may allow the electronic device 900 to communicate wirelessly or wiredly with another device to exchange data. Although FIG. 16 shows an electronic device 900 with various devices, it should be understood that it is not required to implement or provide all shown devices. Alternatively, more or fewer devices may be implemented or provided.

In particular, according to embodiments of the present disclosure, the process described above with reference to the flowchart may be implemented as a computer software program. For example, an embodiment of the present disclosure includes a computer software program product that includes a computer program carried on a computer readable medium, and the computer program includes program codes used to perform the methods shown in the flowchart. In such an embodiment, the computer program may be downloaded and installed from a network by using the communications device 909, or installed from the storage device 908, or installed from the ROM 902. When the computer program is executed by the processing device 901, the foregoing functions defined in the method in embodiments of the present disclosure are executed.

It should be noted that the foregoing computer-readable medium in the present disclosure may be a computer-readable signal medium, a computer-readable storage medium, or any combination of the two. The computer-readable storage medium may be, for example, an electrical, magnetic, optical, electromagnetic, infrared, or semiconductor system, apparatus, or means, or any combination thereof. More specific examples of the computer-readable storage medium may include but are not limited to: an electrical connection having one or more conducting wires, a portable computer disk, a hard disk, a random-access memory (RAM), a read-only memory (ROM), an erasable programmable read only memory (EPROM) or flash memory, an optical fiber, a compact disk read only memory (CD-ROM), an optical storage device, a magnetic storage device, or any suitable combination thereof. In the present disclosure, the computer-readable storage medium may be any tangible medium that includes or stores a program, and the program may be used by or in combination with an instruction execution system, apparatus, or means. In addition, in the present disclosure, the computer-readable signal medium may include a data signal propagated in a baseband or as a part of a carrier, which carries computer-readable program codes. Such a propagated data signal may be in multiple forms, including but not limited to an electromagnetic signal, an optical signal, or any suitable combination thereof. The computer-readable signal medium may further be any computer-readable medium other than the computer-readable storage medium, and the computer-readable signal medium may send, propagate, or transmit a program that is used by or in combination with an instruction execution system, apparatus, or means. The program code included in the computer-readable medium may be transmitted by using any suitable medium, including but not limited to: a wire, an optical cable, radio frequency (RF), or any suitable combination thereof.

The foregoing computer-readable medium may be included in the foregoing electronic device, it may also exist separately without being assembled into the electronic device.

The foregoing computer-readable medium carries one or more programs, when the foregoing one or more programs are executed by the electronic device, causing the electronic device to perform the method shown in the foregoing embodiments.

Computer program codes for performing the operations of the present disclosure may be written in one or more programming languages or a combination thereof, including object oriented programming languages, such as Java, Smalltalk, C++, and conventional procedural programming languages such as "C" or similar program design languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, including a local area network (LAN) or a wide area network (WAN), or may be connected to an external computer (for example, through the Internet by using an Internet service provider).

The flowcharts and block diagrams in the accompanying drawings illustrate possible architectures, functions, and operations of systems, methods, and computer program products according to various embodiments of the present disclosure. In this regard, each block in a flowchart or block diagram may represent a module, program segment, or part of code that includes one or more executable instructions for implementing a specified logical function. It should also be noted that in some alternative implementations, functions marked in the block may also occur in different order than those marked in the accompanying drawings. For example, two blocks represented in succession may actually be executed in substantially parallel, and they may sometimes be executed in a reverse order, depending on the functions involved. It should also be noted that each block in the block diagram and/or flowchart and a combination of blocks in the block diagram and/or flowchart may be implemented by using a dedicated hardware-based system that performs a specified function or operation, or may be implemented by using a combination of dedicated hardware and a computer instruction.

The units involved in embodiments described in the present disclosure may be implemented either by means of software or by means of hardware. The names of these units do not limit the units themselves under certain circumstances, for example, the first obtaining unit may be further described as "a unit for obtaining at least two Internet Protocol addresses".

The functions described above herein may be performed, at least in part, by one or more hardware logic components. For example, and without limitation, example types of hardware logic components that may be used include: Field Programmable Gate Arrays (FPGAs), Application Specific Integrated Circuits (ASICs), Application Specific Standard Products (ASSPs), Systems on Chips (SOCs), Complex Programmable Logical device (CPLD) and so on.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. Machine-readable media may include, but are not limited to, electronic, magnetic, optical, electromagnetic, infrared, or semiconductor systems, apparatus or device, or any suitable combination of the foregoing. More specific examples of machine-readable storage media would include one or more wire-based electrical connection, portable computer disks, hard disks, random access memory (RAM), read only memory (ROM), erasable programmable read only memory (EPROM or flash memory), optical fiber, portable compact disk read-only memory (CD-ROM), optical storage device, magnetic storage device, or any suitable combination of the foregoing content.

In a first aspect, according to one or more embodiments of the present disclosure, a method for triggering a multimedia component is provided, comprising:
In response to a gesture operation for playing a video playback interface, determining a target trigger region, the target trigger region being a contact region on the video playback interface for the gesture operation, the video playback interface being configured to play a target video currently displayed; detecting the target trigger region and triggering a hidden component or a video component based on a detection result, wherein the hidden component is configured to display a corresponding target page in the video playback interface after being triggered, and the video component is configured to perform a first application function on the target video after being triggered.

According to one or more embodiments of the present disclosure, in response to a gesture operation for a video playback interface, determining a target trigger region comprises: obtaining a contact coordinate corresponding to the gesture operation, the contact coordinate representing a coordinate of a contact point of the gesture operation on the video playback interface; and determining a hidden trigger region within a first distance from the contact coordinate as the target trigger region based on the contact coordinate, wherein the hidden trigger region is a region provided with a hidden component.

According to one or more embodiments of the present disclosure, detecting the target trigger region and triggering a hidden component or a video component based on a detection result comprises: detecting a target object in a target video in real time; in response to the target trigger region being located within a recognition contour of the target object in the target video, triggering the hidden component, wherein the target object is obtained by performing image recognition for a current frame of the target video; in response to the target trigger region being located outside the recognition contour of the target object in the target video, triggering the video component.

According to one or more embodiments of the present disclosure, the video playback interface comprises a video container and a page container with overlapping settings, wherein the video container is configured to display the target video and set the video component, the page container is configured to display the target page and set the hidden component, and the page container is invisible before the in response to a gesture operation for a video playback interface.

According to one or more embodiments of the present disclosure, detecting the target trigger region and triggering a hidden component or a video component based on a detection result comprises: detecting a target trigger region of the page container; in response to a hidden component existing in the target trigger region of the page container, invoking a first invoking function corresponding to the hidden component, and displaying a corresponding target page in the page container based on an invoking result of the first invoking function.

According to one or more embodiments of the present disclosure, the method further comprises: in response to no hidden component existing in the target trigger region of the page container, invoking a second invoking function corresponding to a video component in the video container, and executing the first application function based on an invoking result of the second invoking function.

According to one or more embodiments of the present disclosure, the video container is implemented based on canvas; and the page container is implemented based on a lynx container.

According to one or more embodiments of the present disclosure, before in response to a gesture operation for a video playback interface, determining a target trigger region, the method further comprises: setting the page container to a visible state and displaying, in the page container, an indication identification corresponding to the hidden component, the indication identification being used for indicating a trigger region corresponding to the hidden component.

According to one or more embodiments of the present disclosure, the gesture operation is a long-pressing gesture operation, and before triggering a hidden component, the method further comprises: in response to the long-pressing gesture operation, displaying a guidance identification; triggering a hidden component comprises: after detecting the long-pressing gesture operation for a first duration, triggering a hidden component corresponding to the target trigger region, to display, in the video playback interface, a target page corresponding to the hidden component.

In a second aspect, according to one or more embodiments of the present disclosure, an apparatus for triggering a multimedia component is provided, comprising:
A response module configured to in response to a gesture operation for a video playback interface, determine a target trigger region, the target trigger region being a contact region of the gesture operation on the video playback interface, the video playback interface being configured to play a target video currently displayed;
A trigger module configured to detect the target trigger region and trigger a hidden component or a video component based on a detection result, wherein the hidden component is configured to display a corresponding target page in the video playback interface after being triggered, and the video component is configured to perform a first application function on the target video after being triggered.

In one embodiment of the present disclosure, the response module is specifically configured to: obtain a contact coordinate corresponding to the gesture operation, the contact coordinate representing a coordinate of a contact point of the gesture operation on the video playback interface; determine a hidden trigger region within a first distance from the contact coordinate as the target trigger region based on the contact coordinate, wherein the hidden trigger region is a region provided with a hidden component.

In one embodiment of the present disclosure, the trigger module is specifically configured to: detect a target object in a target video in real time; in response to the target trigger region being located within a recognition contour of the target object in the target video, trigger the hidden component, wherein the target object is obtained by performing image recognition for a current frame of the target video; in response to the target trigger region being located outside the recognition contour of the target object in the target video, trigger the video component.

In one embodiment of the present disclosure, the video playback interface comprises a video container and a page container with overlapping settings, wherein the video container is configured to display the target video and set the video component, the page container is configured to display the target page and set the hidden component, and the page container is invisible before the in response to a gesture operation for a video playback interface.

In one embodiment of the present disclosure, the trigger module is specifically configured to: detect a target trigger region of the page container; in response to a hidden component existing in the target trigger region of the page container, invoke a first invoking function corresponding to the hidden component, and displaying a corresponding target page in the page container based on an invoking result of the first invoking function.

In one embodiment of the present disclosure, the trigger module is further configured to: in response to no hidden component existing in the target trigger region of the page container, invoke a second invoking function corresponding to a video component in the video container, and execute the first application function based on an invoking result of the second invoking function.

In one embodiment of the present disclosure, the video container is implemented based on canvas; and the page container is implemented based on a lynx container.

In one embodiment of the present disclosure, before in response to a gesture operation for a video playback interface, determining a target trigger region, the trigger module is further configured to set the page container to a visible state and display, in the page container, an indication identification corresponding to the hidden component, the indication identification being used for indicating a trigger region corresponding to the hidden component.

In one embodiment of the present disclosure, the gesture operation is a long-pressing gesture operation; and before triggering a hidden component, the trigger module is further configured to: in response to the long-pressing gesture operation, display a guidance identification;
When triggering a hidden component, the trigger module is specifically configured to: after detecting the long-pressing gesture operation for a first duration, trigger a hidden component corresponding to the target trigger region, to display, in the video playback interface, a target page corresponding to the hidden component.

In a third aspect, according to one or more embodiments of the present disclosure, an electronic device is provided, comprising: a processor, and a memory communicatively connected to the processor;
The memory storing computer executable instructions ;
The processor executing the computer executable instructions stored in the memory to implement the method for triggering a multimedia component according to the first aspect and various possible designs of the first aspect.

In a fourth aspect, according to one or more embodiments of the present disclosure, a computer-readable storage medium is provided, where the computer-readable storage medium stores computer-executable instructions, when a processor executes the computer executable instructions, implements the method for triggering a multimedia component according to the first aspect and the various possible designs of the first aspect.

In a fifth aspect, an embodiment of the present disclosure provides a computer program product, comprising a computer program when being executed by a processor, implementing the method for triggering a multimedia component according to the first aspect and various possible designs of the first aspect.

In a sixth aspect, an embodiment of the present disclosure provides a computer program, the computer program being configured to implement the method for triggering a multimedia component according to the first aspect and various possible designs of the first aspect.

The above description is only embodiments of the present disclosure and an illustration of the technical principles utilized. It should be understood by those skilled in the art that the scope of disclosure involved in the present disclosure is not limited to technical solutions formed by a particular combination of the above technical features, but also covers other technical solutions formed by any combination of the above technical features or their equivalent features without departing from the above disclosed concept, for example, a technical solution formed by interchanging the above features with (but not limited to) technical features with similar functions disclosed in the present disclosure.

Further, although the operations are depicted using a particular order, this should not be construed as requiring that the operations be performed in the particular order shown or in sequential order of execution. Multitasking and parallel processing may be advantageous in certain environments. Similarly, while several specific implementation details are included in the above discussion, these should not be construed as limiting the scope of the present disclosure. Certain features described in the context of separate embodiments may also be implemented in combination in a single embodiment. Conversely, various features described in the context of a single embodiment may also be implemented in multiple embodiments, either individually or in any suitable sub-combination.

Although the present subject has been described using language specific to structural features and/or method logical actions, it should be understood that the subject limited in the appended claims is not necessarily limited to the particular features or actions described above. Rather, the particular features and actions described above are merely example forms of implementing the claims.

## Claims

1. A method for triggering a multimedia component, comprising:
in response to a gesture operation for a video playback interface, determining a target trigger region, the target trigger region being a contact region on the video playback interface for the gesture operation, the video playback interface being configured to play a target video currently displayed;
detecting the target trigger region and triggering a hidden component or a video component based on a detection result, wherein the hidden component is configured to display a corresponding target page in the video playback interface after being triggered, and the video component is configured to perform a first application function on the target video after being triggered.

2. The method of claim 1, wherein in response to a gesture operation for a video playback interface, determining a target trigger region comprises:
obtaining a contact coordinate corresponding to the gesture operation, the contact coordinate representing a coordinate of a contact point of the gesture operation on the video playback interface;
determining a hidden trigger region within a first distance from the contact coordinate as the target trigger region based on the contact coordinate, wherein the hidden trigger region is a region provided with a hidden component.

3. The method of claim 1 or 2, wherein detecting the target trigger region and triggering a hidden component or a video component based on a detection result comprises:
detecting a target object in a target video in real time;
in response to the target trigger region being located within a recognition contour of the target object in the target video, triggering the hidden component, wherein the target object is obtained by performing image recognition for a current frame of the target video;
in response to the target trigger region being located outside the recognition contour of the target object in the target video, triggering the video component.

4. The method of claim 1 or 2, wherein the video playback interface comprises a video container and a page container with overlapping settings, wherein the video container is configured to display the target video and set the video component, the page container is configured to display the target page and set the hidden component, and the page container is invisible before the in response to a gesture operation for a video playback interface.

5. The method of claim 4, wherein detecting the target trigger region and triggering a hidden component or a video component based on a detection result comprises:
detecting a target trigger region of the page container;
in response to a hidden component existing in the target trigger region of the page container, invoking a first invoking function corresponding to the hidden component, and displaying a corresponding target page in the page container based on an invoking result of the first invoking function.

6. The method of claim 5, wherein the method further comprises:
in response to no hidden component existing in the target trigger region of the page container, invoking a second invoking function corresponding to a video component in the video container, and executing the first application function based on an invoking result of the second invoking function.

7. The method of claim 5 or 6, wherein the video container is implemented based on canvas; and the page container is implemented based on a lynx container.

8. The method of any of claims 4-7, wherein before in response to a gesture operation for a video playback interface, determining a target trigger region, the method further comprises:
setting the page container to a visible state and displaying, in the page container, an indication identification corresponding to the hidden component, the indication identification being used for indicating a trigger region corresponding to the hidden component.

9. The method of any of claims 1-8, wherein the gesture operation is a long-pressing gesture operation, and before triggering a hidden component, the method further comprises:
in response to the long-pressing gesture operation, displaying a guidance identification;
triggering a hidden component comprises:
after detecting the long-pressing gesture operation for a first duration, triggering a hidden component corresponding to the target trigger region, to display, in the video playback interface, a target page corresponding to the hidden component.

10. An apparatus for triggering a multimedia component, comprising:
a response module configured to in response to a gesture operation for a video playback interface, determine a target trigger region, the target trigger region being a contact region of the gesture operation on the video playback interface, the video playback interface being configured to play a target video currently displayed;
a trigger module configured to detect the target trigger region and trigger a hidden component or a video component based on a detection result, wherein the hidden component is configured to display a corresponding target page in the video playback interface after being triggered, and the video component is configured to perform a first application function on the target video after being triggered.

11. An electronic device, comprising: a processor, and a memory communicatively connected to the processor;
the memory storing computer executable instructions;
the processor executing the computer executable instructions stored in the memory to implement the method for triggering a multimedia component of any of claims 1 to 9.

12. A computer readable storage medium, the computer readable storage medium storing computer executable instructions, when a processor executes the computer executable instructions, implements the method for triggering a multimedia component of any of claims 1 to 9.

13. A computer program product, comprising a computer program when being executed by a processor, implementing the method for triggering a multimedia component of any of claims 1 to 9.

14. A computer program, the computer program being configured to implement the method for triggering a multimedia component of any of claims 1 to 9.
